Europäisches Patentamt

European Patent Office

Office européen des brevets

(19)

(11) Publication number: 0 307 582
A2

## (12) EUROPEAN PATENT APPLICATION

(21) Application number: 88111561.2

(51) Int. Cl.⁴: B60C 23/04

(22) Date of filing: 19.07.88

The title of the invention has been amended (Guidelines for Examination in the EPO, A-III, 7.3).

(30) Priority: 21.07.87 IT 6763287

(43) Date of publication of application:
22.03.89 Bulletin 89/12

(84) Designated Contracting States:
DE ES FR GB

(71) Applicant: URMET S.p.A. Costruzioni
Elettro-Telefoniche
Via Bologna 188/C
I-10154 Torino(IT)

(72) Inventor: Mondardini, Massimo
Via Mazzini 40
I-10123 Torino(IT)

(74) Representative: Modiano, Guido et al
MODIANO, JOSIF, PISANTY & STAUB
Modiano & Associati Via Meravigli, 16
I-20123 Milan(IT)

(54) Pressure-balancing distributing valve with selective cutoff for tyres of twin wheels of motor vehicles equipped with an onboard minimum-pressure warning system.

(57) A valvular distributor comprising a distributor body (20) with a single collector (21) having, at one end, a cap valve (22) connectable to the compressed-air source, and at the other end sealing coupling means for connection to the electropneumatic transducer of the warning system; a pair of distribution ducts (25-26) extending from said collector and ending with corresponding tangs for the insertion of the tubes leading to the tires and a pair of valvular shutters (29-30) pushed to open by the inflation pressure and actuated by an adjustable spring (37) so that each cuts off its corresponding derived duct, to cutoff the connection between the two tires, when the action of the pressure becomes smaller than the load of the spring.

EP 0 307 582 A2

Fig. 3

## VALVULAR PRESSURE-BALANCING DISTRIBUTOR WITH SELECTIVE CUTOFF, FOR TIRES OF TWIN WHEELS OF MOTOR VEHICLES EQUIPPED WITH ONBOARD MINIMUM-PRESSURE WARNING SYSTEM

The present invention relates to a valvular pressure-balancing distributor with selective cutoff for tires of twin wheels of motor vehicles having onboard minimum-pressure warning systems.

In motor vehicles having twin wheels it is first of all very important, in terms of safety in travelling, of correct distribution of the load and of wear, to keep the inflation pressure at the same value in both tires even if leaks occur in one of them.

If the vehicle is equipped with onboard systems for warning of the maximum and/or minimum value of the inflation pressure it is also indispensable to have both tires of the twin wheels subject to the control of the warning system, the functional effectiveness whereof would otherwise be completely impaired.

The aim of the present invention is to achieve both these results, and within this aim it has the following important particular objects:
- to provide a simple and reliable valvular distributor adapted to allow the simultaneous and balanced inflation of both tires and to keep, in case of leaks in one of them, the pressure balanced down to the minimum threshold value, producing the automatic mutual cutoff of the two tires when said value is reached;
- to provide a valvular distributor the adoption whereof allows to simplify the onboard system for warning that said threshold value has been reached, by adopting a single electropneumatic transducer for detecting and controlling the pressure in both tires of each twin wheel;
- to provide a valvular distributor adapted to allow the easy setting of the preset minimum threshold pressure for both tires of each twin wheel.

To achieve this aim, these important objects and others which will become apparent from the following detailed description, the present invention relates to a valvular pressure-balancing distributor with selective cutoff, characterized in that it comprises a distributor body with a single collector having, at one end, a valve connectable to the compressed-air source, and, at the other end, a connection with elastic sealing coupling for connection to the electropneumatic transducer of the warning system; a pair of distribution ducts extending from said collector and ending with corresponding tangs for the insertion of the tubes leading to the tires and a pair of valvular shutters pushed to open by the inflation pressure and actuated by an adjustable spring so that each cuts off its corresponding derived duct, to cut off the connection between the two tires, when the action of the pressure becomes smaller than the load of the spring.

Further characteristics, aims and advantages of the present invention will become apparent from the following detailed description with reference to the accompanying drawings, given only by way of non limitative example, wherein:

figure 1 is a partial sectional perspective view of a pair of twin wheels equipped with an onboard minimum-pressure warning system which comprises the valvular distributor according to the present invention,

figure 2 is a lateral elevation view of the valvular distributor alone,

figure 3 is a deviated sectional view in enlarged scale taken along the line III-III of figure 2,

figure 4 is a longitudinal sectional view taken along the line IV-IV of figure 3,

figure 5 is a partial sectional view taken along the line V-V of figure 4.

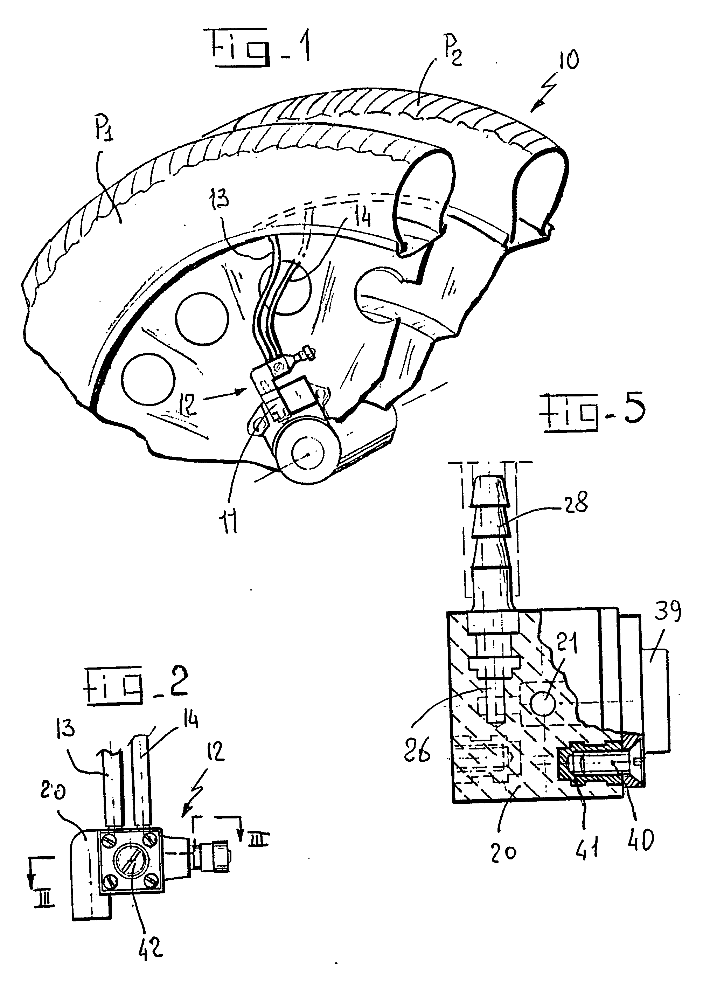

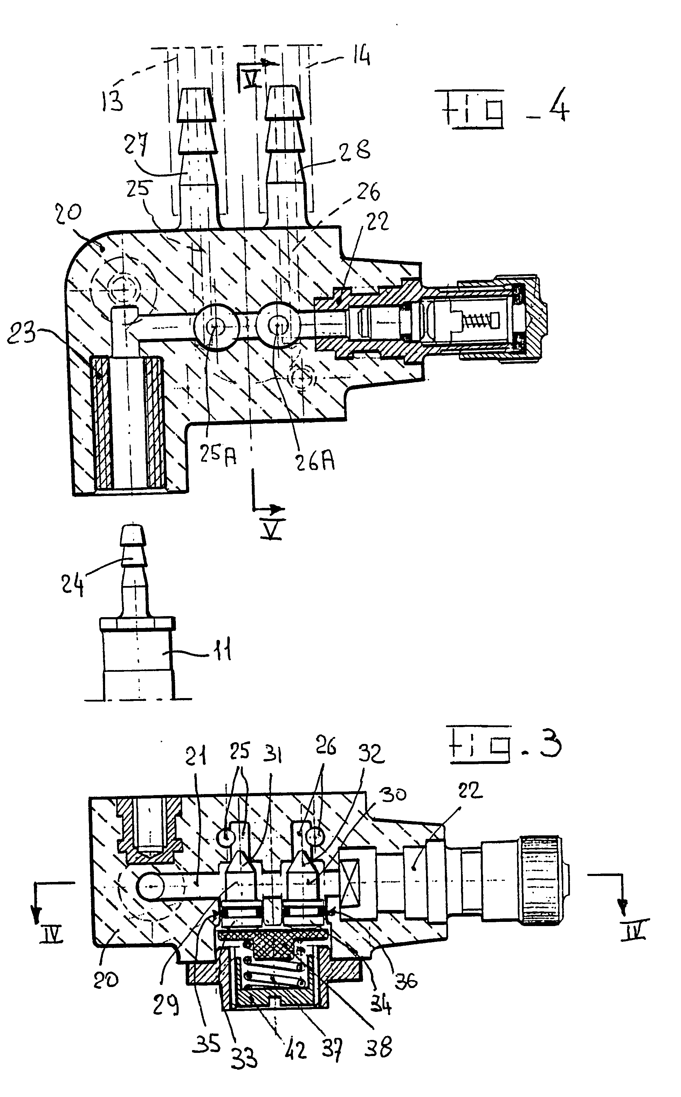

In the drawings, the reference numeral 10 generally indicates a twin wheel, the electropneumatic transducer of the per se known onboard minimum-pressure warning system is generally indicated by the reference numeral 11, and the reference numeral 12 indicates the valvular distributor according to the present invention, connected to the tires P1-P2 of the wheel 10 by means of respective flexible connecting tubes 13-14.

The distributor 12 is substantially constituted by a pipe-like body 20, preferably in polymeric material to reduce weight, comprising a single collector 21. An end of said collector is connected to a known valve or cap valve 22 connectable to the compressed-air source; the body of said valve being sealingly embedded in the material of the body 20 of the distributor, e.g. by molding the body of the valve and the body of the distributor together. The other end of the collector 21 has a bush 23 in elastomer material for the sealing coupling, onto the connecting tang 24, of the electropneumatic transducer 11.

From the single collector 21 there extends a pair of distribution ducts 25-26 ending with corresponding external connecting tangs 27-28 on which the flexible tubes 13-14 are inserted. The inlet port 23-24 of both said distribution ducts is cutoff by corresponding valve shutters 29 and 30 respectively. Each shutter comprises a conical end 31-32 adapted to sealingly engage the input port of the corresponding distribution duct and a widened head 33-34 sealingly slideable in a corresponding cylindrical seat 35-36 of the body 20 of the distributor. The heads 33-34 each have a seat for an O-type annular gasket and are subject on one side to the pressure of the air fed into the collector 21 and on the opposite side to the action of a spring 37 which acts on both shutters by means of a single pusher plate 38.

The spring 37 is accommodated in a metal casing 39 connected to the body 20 by means of screws 40 which engage in threaded bushes 41 embedded by molding in place into the body 20. The casing 39 has an internal thread with which there engages a correspondingly threaded dowel 42 which is used to calibrate the load of the spring 37.

The operation of the valvular distributor as described is as follows: by virtue of the elastomer bush 23 the distributor 12 is stably sealingly inserted on the electropneumatic transducer 11 which is in turn connected to the rim of the wheel, by means of a retention plate, at the hub, for reasons both of dynamic balancing and of reduction of the mass actions due to centrifugal force.

By means of the cap valve 22 the simultaneous inflation of both tires of the wheel 10 is performed.

The compressed air which reaches the common collector 21, by acting on the heads 33-34 of the shutters 29-30, in fact moves these last to open, against the action of the spring 37, and enters both tires through the distribution ducts 25-26 and the connecting tubes 13-14. The compressed air simultaneously reaches the transducer 11, deactivating any minimum-pressure warning. If a leak occurs in one of the two litres, by virtue of the connection between said tires the pressure drops but stays balanced in both said tires, until the preset value equivalent to the unitary adjustment load of the spring is reached. This load is chosen slightly smaller than the minimum allowed pressure value so that the intervention of the transducer 11 occurs first and warns of the anomaly onboard the vehicle and the spring 37 pushes both shutters 29-30 to close immediately after by means of the plate 38, said shutters cutting off the corresponding distribution ducts 25-26. The damaged tire is thus left fully flat, while the undamaged one stays inflated at its minimum pressure value.

Naturally, the concept of the invention being invariant, the details of execution and the embodiments may be extensively variated with respect to what is described and illustrated by way of example without thereby abandoning the scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Valvular pressure-balancing distributor with selective cutoff, for tires of twin wheels of motor vehicles having an onboard minimum-pressure warning system, characterized in that it comprises a distributor body with a single collector having, at one end, a cap valve connectable to the compressed-air source, at the other end sealing coupling means for connection to the electropneumatic transducer of the warning system; a pair of distribution ducts extending from said collector and ending with corresponding tangs for the insertion coupling of the tubes leading to the tires and a pair of valvular shutters pushed to open by the inflation pressure and actuated by an adjustable spring so that each cuts off its corresponding derived duct, to cutoff the connection between the two tires, when the action of the pressure becomes smaller than the load of the spring.

2. Valvular distributor according to claim 1, characterized in that the body of the distributor is in polymeric material and contains metallic inserts and the cap valve inserted by molding in place.

3. Valvular distributor according to claim 1, characterized in that said sealing insertion means are constituted by a bush in elastomer material.

4. Valvular distributor according to the preceding claims, characterized in that said valvular shutters each comprise a conical end adapted to sealingly engage the inlet port of the corresponding derived duct and a widened head sealingly slideable in a corresponding cylindrical seat of the distributor body.

5. Valvular distributor according to claims 1 and 4, characterized in that said adjustable spring acts simultaneously on the heads of both valvular shutters with the interposition of a single pusher plate.

6. Valvular distributor according to claims 1, 4 and 5, characterized in that said spring is accommodated in a casing having an inner thread with which there engages a correspondingly threaded dowel which is used to adjust the load of the spring.

7. Valvular distributor according to the preceding claims, characterized in that the unitary load of the spring is selected slightly smaller than the minimum allowed inflation pressure to obtain, in this order, first the intervention of the transducer which warns of the anomaly and, successively, the mutual cutoff of the tires.

**Fig-1**

P₁  P₂  10

13  14

12  11

**Fig-5**

28

21  39

26

20  41  40

**Fig-2**

13  14  12

20

III  III

42

FIG.-4

FIG.3